# EUROPEAN PATENT APPLICATION

(11) **EP 4 697 578 A1**
(43) Date of publication of application: **18.02.2026**
(21) Application number: 25195837.7
(22) Date of filing: 14.08.2025
(51) Int. Cl.: H02M 3/158

(54) **SINGLE-INDUCTOR MULTIPLE-OUTPUT VOLTAGE CONVERTER, POWER SUPPLY CHIP, AND ELECTRONIC DEVICE**

(30) Priority: 16.08.2024 CN 202411133063
(71) Applicant: Telink Semiconductor (Shanghai) Co., Ltd., Shanghai 201203 (CN)
(72) Inventor: PANG, Jian, Shanghai, 201203 (CN); LING, Yu, Shanghai, 201203 (CN); GU, Haitao, Shanghai, 201203 (CN)
(74) Representative: Dantz, Jan Henning

(57) **Abstract**

The present disclosure provides a single-inductor multiple-output voltage converter, a power supply chip, and an electronic device, where the single-inductor multiple-output voltage converter comprises an energy generation circuit, an energy distribution circuit, a peak-inductor-current detection circuit, a zero-inductor-current detection circuit, and a control logic circuit. The aforementioned converter can provide multiple different output voltages using a single inductor without multiple operational amplifiers, thereby avoiding excessive bandwidth demand associated with multiple operational amplifiers, thus reducing power consumption.

## Description

### TECHNICAL FIELD

The present disclosure relates to the field of electronic technologies, and specifically to a single-inductor multiple-output voltage converter, a power supply chip, and an electronic device.

### BACKGROUND

Single-inductor multiple-output (SIMO) converters are widely used in portable electronic products, each utilizing a single inductor to provide multiple different output voltages, thereby reducing the number of package pins and external inductors, thus lowering component costs and improving power efficiency.

Conventional SIMO voltage converters typically employ voltage mode or current mode control. In either case, a multi-channel output voltage converter requires multiple operational amplifiers, each corresponding to a respective output channel. In practical applications of SIMO voltage converters, the bandwidth of the operational amplifiers is often increased to improve the loop transient response capability. However, since bandwidth is generally proportional to power consumption, conventional SIMO voltage converters tend to consume more power, making them unsuitable for low-power applications.

### SUMMARY

Embodiments of the present disclosure provide a single-inductor multiple-output voltage converter, a power supply chip, and an electronic device, where the converter can provide multiple different output voltages using a single inductor without multiple operational amplifiers, thereby avoiding excessive bandwidth demand associated with multiple operational amplifiers, thus reducing power consumption.

In a first aspect, the present disclosure provides a single-inductor multiple-output voltage converter. The converter includes an energy generation circuit, an energy distribution circuit, a peak-inductor-current detection circuit, a zero-inductor-current detection circuit, and a control logic circuit.

The energy generation circuit includes an inductor, a charging switch, and a discharging switch, where the charging switch has a first terminal connected to an input voltage terminal and a second terminal connected to a first terminal of the inductor, and the discharging switch has a first terminal grounded and a second terminal connected to the first terminal of the inductor.

The energy distribution circuit includes M basic output units connected in parallel, each including an output switch having a first terminal connected to a second terminal of the inductor and a second terminal serving as a corresponding output voltage terminal, M being an integer greater than 1.

The peak-inductor-current detection circuit includes a charging comparator having a positive input terminal connected to the input voltage terminal via a first offset voltage and a negative input terminal connected to the first terminal of the inductor, where the charging comparator is configured to output a high-level signal indicative of peak-inductor-current detection when a voltage at the positive input terminal is higher than a voltage at the negative input terminal.

The zero-inductor-current detection circuit includes a discharging comparator having a positive input terminal connected to the first terminal of the inductor via a second offset voltage and a negative input terminal grounded, where the discharging comparator is configured to output a high-level signal indicative of zero-inductor-current detection when a voltage at the positive input terminal is higher than a voltage at the negative input terminal.

The control logic circuit is connected to the charging comparator and the discharging comparator, and is configured to: control the charging switch and the output switch corresponding to an m-th basic output unit among the M basic output units to turn on for causing the inductor to be charged; when an inductor current through the inductor reaches an upper threshold such that the charging comparator outputs the high-level signal indicative of peak-inductor-current detection, turn off the charging switch and turn on the discharging switch to cause the inductor to discharge energy to the output voltage terminal corresponding to the m-th basic output unit; and when the inductor current reaches a lower threshold such that the discharging comparator outputs the high-level signal indicative of zero-inductor-current detection, turn off the discharging switch and the output switch corresponding to the m-th basic output unit, m being an integer and satisfying M≥m≥1.

In a possible embodiment, the converter further includes an energy recovery circuit, M output-voltage monitoring circuits respectively corresponding to the M basic output units, a rising-edge detection circuit, and a first reset pulse circuit.

The energy recovery circuit includes an energy recovery switch having a first terminal connected to the input voltage terminal and a second terminal connected to the second terminal of the inductor.

Each of the M output-voltage monitoring circuits includes an output-voltage comparator. where the output-voltage comparator of an m-th output-voltage monitoring circuit corresponding to the m-th basic output unit among the M output-voltage monitoring circuits is configured to be triggered to output a high-level comparison signal for the m-th basic output unit when an output voltage corresponding to the m-th basic output unit reaches a preset value.

The rising-edge detection circuit includes a first D flip-flop configured to generate a charge termination signal for the m-th basic output unit when the m-th output-voltage monitoring circuit generates the high-level comparison signal.

The first reset pulse circuit is configured to reset the first D flip-flop based on a control signal of the control logic circuit that controls the discharging switch.

The control logic circuit is connected to the first D flip-flop, and is further configured to: when the first D flip-flop generates the charge termination signal for the m-th basic output unit, turn off the charging switch and the output switch corresponding to the m-th basic output unit and turn on the discharging switch and the energy recovery switch to cause the inductor to discharge energy back to the input voltage terminal; and when the inductor current reaches the lower threshold such that the discharging comparator outputs the high-level signal indicative of zero-inductor-current detection, turn off the discharging switch and the energy recovery switch.

In a possible embodiment, the rising-edge detection circuit further includes a second D flip-flop, and the converter further includes a second reset pulse circuit.

The second reset pulse circuit is configured to reset the second D flip-flop based on a control signal of the control logic circuit that controls the charging switch.

The second D flip-flop is configured to generate a discharge termination signal for the m-th basic output unit when the m-th output-voltage monitoring circuit generates the high-level comparison signal.

The control logic circuit is connected to the second D flip-flop and is further configured to: when the second D flip-flop generates the discharge termination signal for the m-th basic output unit, turn off the charging switch and the output switch corresponding to the m-th basic output unit and turn on the discharging switch and the energy recovery switch to cause the inductor to discharge energy back to the input voltage terminal; and when the inductor current reaches the lower threshold such that the discharging comparator outputs the high-level signal indicative of zero-inductor-current detection, turn off the discharging switch and the energy recovery switch.

In a possible embodiment, the converter further includes M resistive feedback circuits respectively corresponding to the M basic output units.

Each of the M resistive feedback circuits includes a first feedback resistor and a second feedback resistor connected in series, where for an m-th resistive feedback circuit corresponding to the m-th basic output unit among the M resistive feedback circuits, the first feedback resistor has a first terminal connected to the output voltage terminal corresponding to the m-th basic output unit, the second feedback resistor has a second terminal grounded, and a voltage at a node between the first feedback resistor and the second feedback resistor serves as a feedback voltage for the output voltage corresponding to the m-th basic output unit.

For the m-th output-voltage monitoring circuit, the output-voltage comparator has a positive input terminal configured to receive the feedback voltage corresponding to the m-th basic output unit and a negative input terminal configured to receive a high reference voltage or a low reference voltage, the high reference voltage being greater than the low reference voltage, where when the output voltage corresponding to the m-th basic output unit has not reached the preset value, the negative input terminal of the output-voltage comparator receives the high reference voltage, and when the output voltage corresponding to the m-th basic output unit reaches the preset value, the output-voltage comparator outputs the high-level comparison signal for the m-th basic output unit, and the negative input terminal of the output-voltage comparator is switched to receive the low reference voltage.

In a possible embodiment, the converter further includes M output load circuits respectively corresponding to the M basic output units.

Each of the M output load circuits includes an output load resistor and an output load capacitor connected in parallel, where for an m-th output load circuit corresponding to the m-th basic output unit among the M output load circuits, the output load resistor has a first terminal connected to the second terminal of the output switch corresponding to the m-th basic output unit and a second terminal grounded, and the output load capacitor has a first terminal connected to the second terminal of the output switch corresponding to the m-th basic output unit and a second terminal grounded.

In a possible embodiment, the converter further includes an AND gate circuit having input terminals configured to receive output signals of the M output-voltage monitoring circuits and an output terminal connected to the first D flip-flop, the second D flip-flop, and the control logic circuit.

In a possible embodiment, the converter further includes a first OR gate circuit and a second OR gate circuit.

The first OR gate circuit has input terminals configured to receive output signals of the peak-inductor-current detection circuit and the first D flip-flop and an output terminal connected to the control logic circuit.

The second OR gate circuit has input terminals configured to receive output signals of the first D flip-flop and the second D flip-flop and an output terminal connected to the control logic circuit.

In a possible embodiment, the energy distribution circuit includes four basic output units connected in parallel.

In a second aspect, the present disclosure also provides a power supply chip including a single-inductor multiple-output voltage converter according to any one of the foregoing embodiments.

In a third aspect, the present disclosure also provides an electronic device including a load and a single-inductor multiple-output voltage converter according to any one of the foregoing embodiments, where the converter is configured to supply power to the load.

In summary, the present disclosure provides a single-inductor multiple-output voltage converter, a power chip, and an electronic device. The converter includes an energy generation circuit, an energy distribution circuit, a peak-inductor-current detection circuit, a zero-inductor-current detection circuit, and a control logic circuit. The energy generation circuit includes an inductor, a charging switch, and a discharging switch, where the charging switch has a first terminal connected to an input voltage terminal and a second terminal connected to a first terminal of the inductor, and the discharging switch has a first terminal grounded and a second terminal connected to the first terminal of the inductor. The energy distribution circuit includes M basic output units connected in parallel, each including an output switch having a first terminal connected to a second terminal of the inductor and a second terminal serving as a corresponding output voltage terminal, M being an integer greater than 1. The peak-inductor-current detection circuit includes a charging comparator having a positive input terminal connected to the input voltage terminal via a first offset voltage and a negative input terminal connected to the first terminal of the inductor, where the charging comparator is configured to output a high-level signal indicative of peak-inductor-current detection when a voltage at the positive input terminal is higher than a voltage at the negative input terminal. The zero-inductor-current detection circuit includes a discharging comparator having a positive input terminal connected to the first terminal of the inductor via a second offset voltage and a negative input terminal grounded, where the discharging comparator is configured to output a high-level signal indicative of zero-inductor-current detection when a voltage at the positive input terminal is higher than a voltage at the negative input terminal. The control logic circuit is connected to the charging comparator and the discharging comparator, and is configured to: control the charging switch and the output switch corresponding to an m-th basic output unit among the M basic output units to turn on for causing the inductor to be charged; when an inductor current through the inductor reaches an upper threshold such that the charging comparator outputs the high-level signal indicative of peak-inductor-current detection, turn off the charging switch and turn on the discharging switch to cause the inductor to discharge energy to the output voltage terminal corresponding to the m-th basic output unit; and when the inductor current reaches a lower threshold such that the discharging comparator outputs the high-level signal indicative of zero-inductor-current detection, turn off the discharging switch and the output switch corresponding to the m-th basic output unit, m being an integer and satisfying M≥m≥1. The aforementioned converter can provide multiple different output voltages using a single inductor without multiple operational amplifiers, thereby avoiding excessive bandwidth demand associated with multiple operational amplifiers, thus reducing power consumption.

Other advantages of the present disclosure will be explained in more detail in the following description and the accompanying drawings.

It should be understood that the above description merely provides an overview of the technical solutions of the present disclosure, so as to offer a general understanding of the technical means and facilitate their implementation based on the specification. In order for the above and other objectives, features, and advantages of the present disclosure to become more apparent and understandable, specific exemplary embodiments are provided below.

### BRIEF DESCRIPTION OF THE DRAWINGS

To more clearly illustrate the technical solutions in the embodiments of the present disclosure, a brief introduction to the drawings required in the embodiments is provided below. The accompanying drawings are incorporated herein and constitute a part of this specification. The drawings illustrate exemplary embodiments in accordance with the present disclosure and, together with the detailed description, are used to explain the technical solutions of the present disclosure. It should be understood that the drawings only show certain embodiments of the present disclosure and should not be considered as limitations on the scope of protection. For a person of ordinary skill in the art, additional related drawings can be obtained based on these figures without creative efforts. Moreover, throughout the drawings, identical reference signs refer to the same components. In the drawings:
FIG. 1 is a schematic structural diagram of a single-inductor multiple-output voltage converter;
FIG. 2 is a circuit schematic diagram of a single-inductor multiple-output voltage converter according to an embodiment of the present disclosure;
FIG. 3 is a steady-state waveform diagram of a single-inductor multiple-output voltage converter according to an embodiment of the present disclosure;
FIG. 4 is a waveform diagram in which an output voltage reaches a preset value during a charging phase in a single-inductor multiple-output voltage converter according to an embodiment of the present disclosure; and
FIG. 5 is a waveform diagram in which an output voltage reaches a preset value during a discharging phase in a single-inductor multiple-output voltage converter according to an embodiment of the present disclosure.

### DETAILED DESCRIPTION

The exemplary embodiments of the present disclosure will be described in more detail below with reference to the accompanying drawings. Although the drawings show exemplary embodiments of the present disclosure, it should be understood that the present disclosure may be implemented in various forms and should not be limited to the embodiments set forth herein. Rather, these embodiments are provided to further facilitate understanding of the present disclosure and to fully convey the scope of the present disclosure to a person of ordinary skill in the art.

In the description of the embodiments of the present disclosure, it should be understood that terms such as "include" or "have" are intended to indicate the existence of features, integers, steps, operations, components, elements stated in this specification or any combination thereof, without excluding the existence of one or more other features, integers, steps, operations, components, elements or any combination thereof.

Unless otherwise specified, the symbol "/" denotes an "or" relationship. For example, "A/B" may mean A or B. The term "and/or" describes a relationship between associated objects, indicating that either or both of the objects may exist. For example, "A and/or B" indicates that A alone, B alone, or both A and B may be present.

Terms such as "first" and "second" are merely for a descriptive purpose, and cannot be understood as indicating or implying a relative importance, or implicitly indicating the number of the indicated technical features. Hence, the features defined by "first" and "second" can explicitly or implicitly include one or more features. In the description of embodiments of the present disclosure, "a plurality of" means two or more in number, unless otherwise specified.

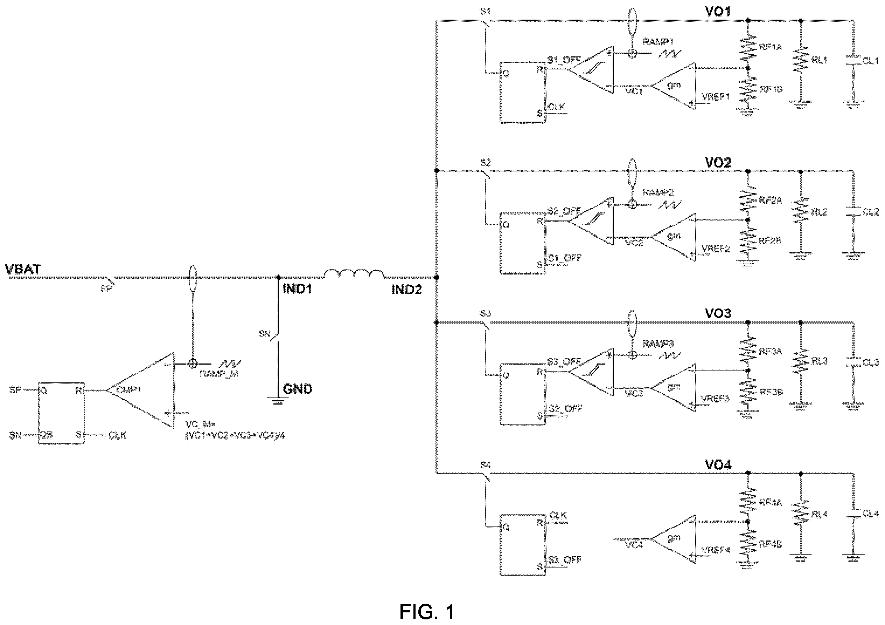

Conventional single-inductor multiple-output voltage converters typically employ voltage mode or current mode control. Taking a four-channel output voltage converter as an example, as shown in FIG. 1, in current mode, the output feedback voltage is sampled and input into an operational amplifier together with a reference voltage. The operational amplifier outputs the voltage difference between the two, which is then compared with a voltage formed by superimposing a triangular wave and a sampled inductor current signal, thereby generating a switching control signal; in voltage mode, the output feedback voltage is sampled and input into an operational amplifier together with a reference voltage. The operational amplifier outputs the voltage difference between the two, which is then directly compared with a triangular wave to generate a switching control signal.

Thus, in either case, a multi-channel output voltage converter requires multiple operational amplifiers, each corresponding to a respective output channel.

In practical applications of SIMO voltage converters, the bandwidth of the operational amplifiers is often increased to improve the loop transient response capability. However, since bandwidth is generally proportional to power consumption, conventional SIMO voltage converters tend to consume more power, making them unsuitable for low-power applications.

In view of this, the present disclosure provides a single-inductor multiple-output voltage converter, a power supply chip, and an electronic device, where the converter can provide multiple different output voltages using a single inductor without multiple operational amplifiers, thereby avoiding excessive bandwidth demand associated with multiple operational amplifiers, thus reducing power consumption.

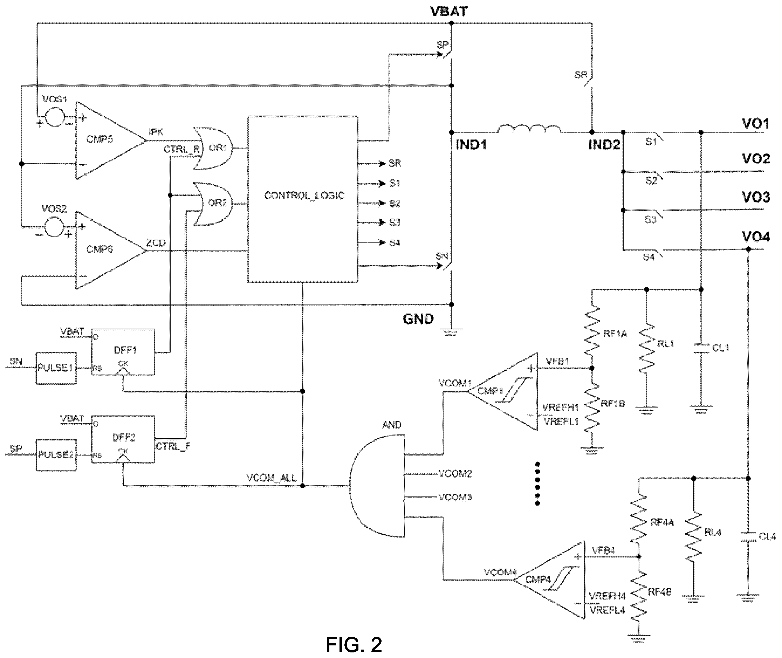

The single-inductor multiple-output voltage converter according to the present disclosure will be explained below through certain embodiments. As shown in FIG. 2 illustrating a circuit schematic diagram of a single-inductor multiple-output voltage converter according to an embodiment of the present disclosure, the converter includes an energy generation circuit, an energy distribution circuit, a peak-inductor-current detection circuit, a zero-inductor-current detection circuit, and a control logic circuit.

The energy generation circuit includes an inductor, a charging switch SP, and a discharging switch SN, where the charging switch SP has a first terminal connected to an input voltage terminal VBAT and a second terminal connected to a first terminal of the inductor, and the discharging switch SN has a first terminal grounded and a second terminal connected to the first terminal of the inductor.

The energy distribution circuit includes M basic output units connected in parallel, each including an output switch having a first terminal connected to a second terminal of the inductor and a second terminal serving as a corresponding output voltage terminal, where M is an integer greater than 1.

The M basic output units are configured to output different output voltages respectively. It should be noted that the number of basic output units included in the energy distribution circuit of this embodiment may be determined according to actual application needs and is not limited herein. Taking the energy distribution circuit including four basic output units as an example for explanation, as shown in FIG. 2, the first basic output unit may include a first output switch S1, the second basic output unit may include a second output switch S2, the third basic output unit may include a third output switch S3, and the fourth basic output unit may include a fourth output switch S4, where the first terminals of the first to fourth output switches S1 to S4 are all connected to the second terminal of the inductor, and their second terminals are respectively configured to output a first to fourth output voltages VO1 to VO4.

The peak-inductor-current detection circuit includes a charging comparator CMP5 having a positive input terminal connected to the input voltage terminal VBAT via a first offset voltage VOS1 and a negative input terminal connected to the first terminal of the inductor, where the charging comparator CMP5 is configured output a high-level signal IPK indicative of peak-inductor-current detection when a voltage at the positive input terminal is higher than a voltage at the negative input terminal.

The zero-inductor-current detection circuit includes a discharging comparator CMP6 having a positive input terminal connected to the first terminal of the inductor via a second offset voltage VOS2 and a negative input terminal grounded, where the discharging comparator CMP6 is configured to output a high-level signal ZCD indicative of zero-inductor-current detection when a voltage at the positive input terminal is higher than a voltage at the negative input terminal.

The control logic circuit is connected to the charging comparator CMP5 and the discharging comparator CMP6, and is configured to: control the charging switch SP and the output switch corresponding to an m-th basic output unit among the M basic output units to turn on for causing the inductor to be charged; when an inductor current through the inductor reaches an upper threshold such that the charging comparator CMP5 outputs the high-level signal IPK indicative of peak-inductor-current detection, turn off the charging switch SP and turn on the discharging switch SN to cause the inductor to discharge energy to the output voltage terminal corresponding to the m-th basic output unit; and when the inductor current reaches a lower threshold such that the discharging comparator CMP6 outputs the high-level signal ZCD indicative of zero-inductor-current detection, turn off the discharging switch SN and the output switch corresponding to the m-th basic output unit, m being an integer and satisfying M≥m≥1.

Specifically, the converter of the present disclosure enables the M basic output units to be sequentially charged one by one, allowing the output voltages of the respective basic output units to be gradually increased in sequence.

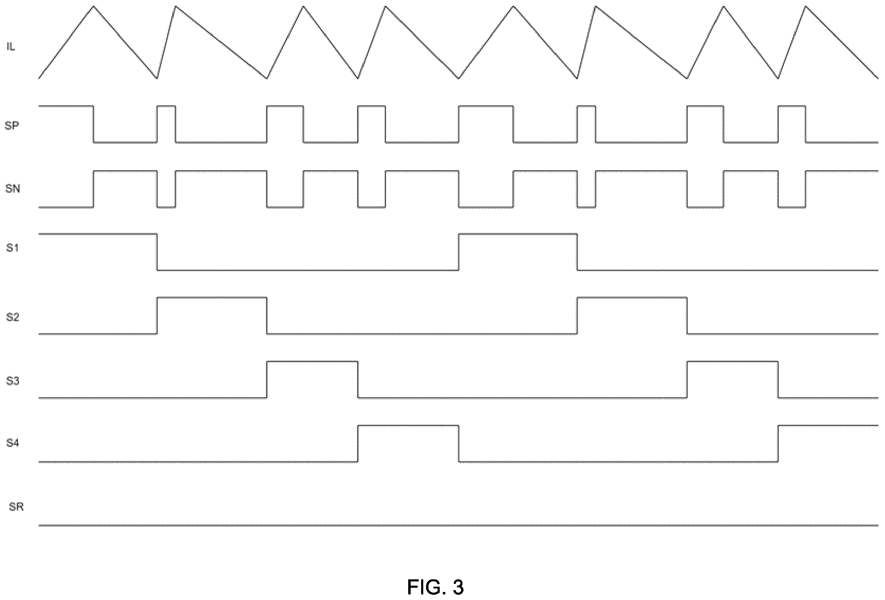

As shown in FIG. 2 and FIG. 3 (where in the switch waveform, the high level indicates the switch is on and the low level indicates the switch is off), taking the first basic output unit among the four as an example, the control logic circuit is configured to turn on the charging switch SP and the first output switch S1, causing the input voltage terminal VBAT to charge the inductor through the charging switch SP and the first output switch S1, such that the inductor current IL flowing through the inductor begins to rise. When the inductor current IL reaches the upper threshold and thus the charging comparator CMP5 outputs the high-level signal IPK indicative of peak-inductor-current detection, the control logic circuit turns off the charging switch SP and turns on the discharging switch SN, to cause the inductor to discharge energy to the first output voltage VO1, such that the inductor current IL begins to fall. When the inductor current IL reaches the lower threshold, and thus the discharging comparator CMP6 outputs the high-level signal ZCD indicative of zero-inductor-current detection, indicating that the energy discharge of the inductor to the first output voltage VO1 is completed, the control logic circuit turns off the discharging switch SN and the first output switch S1.

For more detail, taking the second basic output unit among the four as a further example, the control logic circuit is configured to turn on the charging switch SP and the second output switch S2, causing the input voltage terminal VBAT to charge the inductor through the charging switch SP and the second output switch S2, such that the inductor current IL begins to rise. When the inductor current IL reaches the upper threshold and thus the charging comparator CMP5 outputs the high-level signal IPK indicative of peak-inductor-current detection, the control logic circuit turns off the charging switch SP and turns on the discharging switch SN, to cause the inductor to discharge energy to the second output voltage VO2, such that the inductor current IL begins to fall. When the inductor current IL reaches the lower threshold and thus the discharging comparator CMP6 outputs the high-level signal ZCD indicative of zero-inductor-current detection, indicating that the energy discharge of the inductor to the second output voltage VO is completed, the control logic circuit turns off the discharging switch SN and the second output switch S2.

Operations of the third and fourth basic output units among the four are similar to those of the first and second basic output units described above and thus are omitted herein.

In practical applications, the bandwidth of the operational amplifier loop in a SIMO voltage converter is limited, which prevents abrupt changes in the duty cycles of the charging switch SP and the discharging switch SN, thus the amount of energy delivered per cycle by the inductor is fixed. That is, prior to the response of the main feedback loop, the total energy per cycle delivered to the output voltage terminals of the multiple basic output units is fixed. For example, as shown in FIG. 2, the total energy per cycle distributed to the first to fourth output voltages VO1, VO2, VO3, and VO4 is fixed. Therefore, a load variation in one basic output unit inevitably affects the energy distributed to the other basic output units, leading to jumps in their output voltages, resulting in cross-interference issues.

To further reduce cross-interference among the multiple basic output units, in a possible embodiment, the converter may further include an energy recovery circuit, M output-voltage monitoring circuits respectively corresponding to the M basic output units, a rising-edge detection circuit, and a first reset pulse circuit.

The energy recovery circuit includes an energy recovery switch SR having a first terminal connected to the input voltage terminal VBAT and a second terminal connected to the second terminal of the inductor.

Each of the M output-voltage monitoring circuits includes an output-voltage comparator, where the output-voltage comparator of an m-th output-voltage monitoring circuit corresponding to the m-th basic output unit among the M output-voltage monitoring circuits is configured to be triggered to output a high-level comparison signal for the m-th basic output unit when an output voltage corresponding to the m-th basic output unit reaches a preset value.

Specifically, to monitor the output voltage of each basic output unit, M output-voltage monitoring circuits respectively corresponding to the M basic output units are further included. Each of the M output-voltage monitoring circuits includes an output-voltage comparator. As shown in FIG. 2, the first output-voltage monitoring circuit corresponding to the first basic output unit includes a first output-voltage comparator CMP1, the second output-voltage monitoring circuit corresponding to the second basic output unit includes a second output-voltage comparator CMP2, the third output-voltage monitoring circuit corresponding to the third basic output unit includes a third output-voltage comparator CMP3, and the fourth output-voltage monitoring circuit corresponding to the fourth basic output unit includes a fourth output-voltage comparator CMP4. CMP2 and CMP3 are omitted in FIG. 2.

Taking the m-th output-voltage monitoring circuit corresponding to the m-th basic output unit as an example, when the output voltage corresponding to the m-th basic output unit reaches the preset value, the inductor may not have been fully charged for its current to reach the upper threshold. To avoid interference to other basic output units due to further charge of the inductor, the output-voltage comparator of the m-th output-voltage monitoring circuit may be triggered to output the high-level comparison signal for the m-th basic output unit.

The rising-edge detection circuit includes a first D flip-flop DFF1 configured to generate a charge termination signal for the m-th basic output unit when the m-th output-voltage monitoring circuit generates the high-level comparison signal.

The first reset pulse circuit is configured to reset the first D flip-flop DFF1 based on a control signal of the control logic circuit that controls the discharging switch SN.

The control logic circuit is connected to the first D flip-flop DFF1 and is further configured to: when the first D flip-flop DFF1 generates the charge termination signal for the m-th basic output unit, turn off the charging switch SP and the output switch corresponding to the m-th basic output unit and turn on the discharging switch SN and the energy recovery switch **SR** to cause the inductor to discharge energy back to the input voltage terminal VBAT; and when the inductor current reaches the lower threshold such that the discharging comparator CMP6 outputs the high-level signal ZCD indicative of zero-inductor-current detection, turn off the discharging switch SN and the energy recovery switch SR.

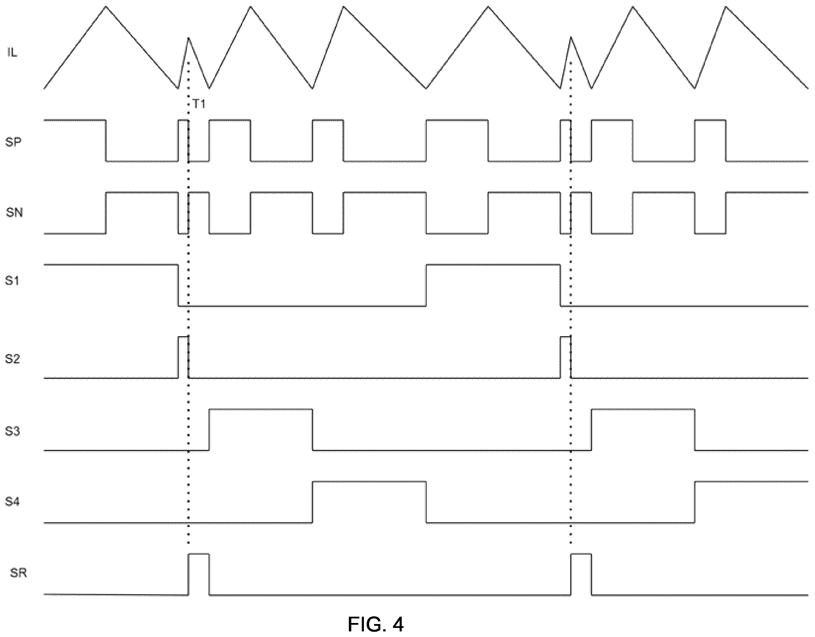

Specifically, taking the m-th basic output unit as the second basic output unit as an example, as shown in FIG. 4, if the output voltage VO2 of the second basic output unit reaches the preset value at time T1 but the inductor has not been charged fully for its current IL to reach the upper threshold, the second output-voltage comparator CMP2 may be triggered to output the high-level comparison signal VCOM2 for the second basic output unit. The first D flip-flop DFF1 is reset in each inductor charging cycle by the control signal of the control logic that controls the discharging switch SN, and when the second output-voltage monitoring circuit generates the high-level comparison signal VCOM2 for the second basic output unit, the first D flip-flop DFF1 generates the charge termination signal CTRL_R for the second basic output unit. The control logic circuit is connected to the first D flip-flop DFF1, and when the first D flip-flop DFF1 generates the charge termination signal CTRL_R for the second basic output unit, control logic circuit turns off the charging switch SP and the second output switch S2 corresponding to the second basic output unit, and turns on the discharging switch SN and the energy recovery switch SR, to cause the inductor to discharge energy back to the input voltage terminal VBAT. When the inductor current IL reaches the lower threshold such that the discharging comparator CMP6 outputs the high-level signal ZCD indicative of zero-inductor-current detection, the control logic circuit turns off the discharging switch SN and the energy recovery switch SR.

It should be noted that any one of the M basic output units may be adjusted using the above method. More specifically, by monitoring the output voltages of the M basic output units, and promptly discharging the inductor by redirecting the inductor current to the input voltage terminal as above when the output voltage of one basic output unit reaches the preset value but the inductor has not been fully charged for its current to reach the upper threshold, it can be ensured that the inductor is fully discharged before the output switch corresponding to the next basic output unit is turned on, thereby preventing the operation of the next basic output unit from being affected, thus reducing cross-interference among the multiple basic output units.

In a possible embodiment, the rising-edge detection circuit may further include a second D flip-flop DFF2, and the converter may further include a second reset pulse circuit.

The second reset pulse circuit is configured to reset the second D flip-flop DFF2 based on a control signal of the control logic circuit that controls the charging switch SP.

The second D flip-flop DFF2 is configured to generate a discharge termination signal for the m-th basic output unit when the m-th output-voltage monitoring circuit generates the high-level comparison signal.

The control logic circuit is connected to the second D flip-flop DFF2, and is further configured to: when the second D flip-flop DFF2 generates the discharge termination signal for the m-th basic output unit, turn off the charging switch SP and the output switch corresponding to the m-th basic output unit and turn on the discharging switch SN and the energy recovery switch SR to cause the inductor to discharge energy back to the input voltage terminal VBAT; and when the inductor current reaches the lower threshold such that the discharging comparator CMP6 outputs the high-level signal ZCD indicative of zero-inductor-current detection, turn off the discharging switch SN and the energy recovery switch SR.

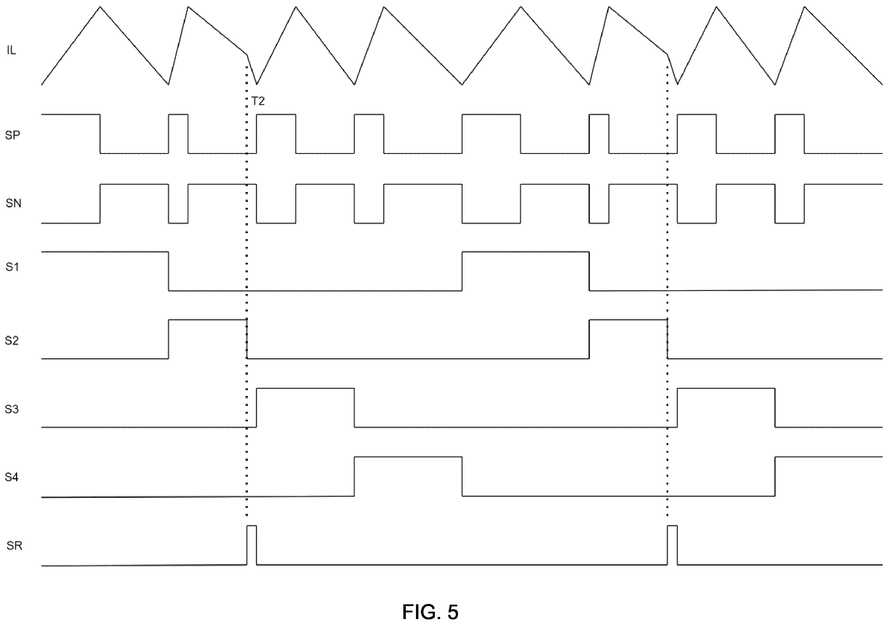

Specifically, taking the m-th basic output unit as the second basic output unit as an example, as shown in FIG. 5, if the output voltage VO2 of the second basic output unit reaches the preset value at time T2 but the inductor has not been fully discharged for its current IL to reach the lower threshold, the second output-voltage comparator CMP2 may be triggered to output the high-level comparison signal VCOM2 for the second basic output unit. The second D flip-flop DFF2 is reset in each inductor charging cycle by the control signal of the control logic that controls the charging switch SP, and when the second output-voltage monitoring circuit generates the high-level comparison signal VCOM2 for the second basic output unit, the second D flip-flop DFF2 generates the discharge termination signal CTRL_F for the second basic output unit. The control logic circuit is connected to the second D flip-flop DFF2, and when the second D flip-flop DFF2 generates the discharge termination signal CTRL_F for the second basic output unit, the control logic circuit turns off the charging switch SP and the second output switch S2 corresponding to the second basic output unit, and turns on the discharging switch SN and the energy recovery switch SR, to cause the inductor discharge energy back to the input voltage terminal VBAT. When the inductor current IL reaches the lower threshold and thus the discharging comparator CMP6 outputs the high-level signal ZCD indicative of zero-inductor-current detection, the control logic circuit turns off the discharging switch SN and the energy recovery switch SR.

It should be noted that any one of the M basic output units may be adjusted using the above method. More specifically, by monitoring the output voltages of the M basic output units, and promptly discharging the inductor by redirecting its current to the input voltage terminal as above when the output voltage of one basic output unit reaches the preset value but the inductor has not been fully discharged for its current to reach the lower threshold, it can be ensured that the inductor is fully discharged before the output switch corresponding to the next basic output unit is turned on, thereby preventing the operation of the next basic output unit from being affected, thus reducing cross-interference among the multiple basic output units.

In a possible embodiment, to accurately monitor the output voltages of the basic output units, the converter may further include M resistive feedback circuits respectively corresponding to the M basic output units.

Each of the M resistive feedback circuits includes a first feedback resistor and a second feedback resistor connected in series, where for an m-th resistive feedback circuit corresponding to the m-th basic output unit among the M resistive feedback circuits, the first feedback resistor has a first terminal connected to the output voltage terminal corresponding to the m-th basic output unit, the second feedback resistor has a second terminal grounded, and a voltage at a node between the first feedback resistor and the second feedback resistor serves as a feedback voltage for the output voltage corresponding to the m-th basic output unit.

Specifically, to accurately monitor the output voltage of each basic output unit, M resistive feedback circuits respectively corresponding to the M basic output units are further included. Each of the M resistive feedback circuits includes a first feedback resistor and a second feedback resistor connected in series. As shown in FIG. 2, the first resistive feedback circuit corresponding to the first basic output unit includes a first feedback resistor RF1A and a second feedback resistor RF1 B; the second resistive feedback circuit includes a first feedback resistor RF2A and a second feedback resistor RF2B; the third resistive feedback circuit includes a first feedback resistor RF3A and a second feedback resistor RF3B; and the fourth resistive feedback circuit includes a first feedback resistor RF4A and a second feedback resistor RF4B. The second and third resistive feedback circuits are omitted in FIG. 2.

Taking the second resistive feedback circuit as an example, a voltage at the node between the first feedback resistor RF2A and the second feedback resistor RF2B serves as the feedback voltage VFB2 for the output voltage corresponding to the second basic output unit.

For the m-th output-voltage monitoring circuit, the output-voltage comparator has a positive input terminal configured to receive the feedback voltage for the m-th basic output unit and a negative input terminal configured to receive a high reference voltage VREFH or a low reference voltage VREFL, where VREFH is greater than VREFL, where when the output voltage corresponding to the m-th basic output unit has not reached the preset value, the negative input terminal of the output-voltage comparator receives the high reference voltage VREFH, and when the output voltage corresponding to the m-th basic output unit reaches the preset value, the output-voltage comparator outputs the high-level comparison signal for the m-th basic output unit, and the negative input terminal of the output-voltage comparator is switched to receive the low reference voltage VREFL.

Taking the m-th output-voltage monitoring circuit as the second output-voltage monitoring circuit as an example, the second output-voltage comparator CMP2 has the positive input terminal configured to receive the feedback voltage VFB2 corresponding to the second basic output unit and the negative input terminal configured to receive a high reference voltage VREFH2 or a low reference voltage VREFL2 corresponding to the second output-voltage monitoring circuit, where the high reference voltage VREFH2 is greater than the low reference voltage VREFL2. When the output voltage VO2 corresponding to the second basic output unit has not reached the preset value, the negative input terminal of the second output-voltage comparator CMP2 receives the high reference voltage VREFH2, and when the output voltage VO2 reaches the preset value, the second output-voltage comparator CMP2 outputs the high-level comparison signal VCOM2 for the second basic output unit, and the negative input terminal of the second output-voltage comparator CMP2 is switched to receive the low reference voltage VREFL2.

Through the above method, the output voltage of each basic output unit can be accurately monitored.

In a possible embodiment, to maintain the corresponding output voltage for each basic output unit when the output switch is off, the converter may further include M output load circuits respectively corresponding to the M basic output units.

Each of the M output load circuits includes an output load resistor and an output load capacitor connected in parallel, where for an m-th output load circuit corresponding to the m-th basic output unit among the M output load circuits, the output load resistor has a first terminal connected to the second terminal of the output switch corresponding to the m-th basic output unit and a second terminal grounded, and the output load capacitor has a first terminal connected to the second terminal of the output switch corresponding to the m-th basic output unit and a second terminal grounded.

Specifically, to maintain the corresponding output voltage for each basic output unit when the output switch is off, the converter may further include M output load circuits respectively corresponding to the M basic output units. Each of the M output load circuits includes an output load resistor and an output load capacitor connected in parallel. As shown in FIG. 2, the first output load circuit corresponding to the first basic output unit includes a first output load resistor RL1 and a first output load capacitor CL1 connected in parallel, the second output load circuit corresponding to the second basic output unit includes a second output load resistor RL2 and a second output load capacitor CL2 connected in parallel, the third output load circuit corresponding to the third basic output unit includes a third output load resistor RL3 and a third output load capacitor CL3 connected in parallel, and the fourth output load circuit corresponding to the fourth basic output unit includes a fourth output load resistor RL4 and a fourth output load capacitor CL4 connected in parallel. The second and third output load circuits are omitted in FIG. 2.

Taking the second basic output unit as an example, when the second output switch S2 is off, the second output load capacitor CL2 included in the second output load circuit can maintain the output voltage VO2 corresponding to the second basic output unit at the preset value.

In a possible embodiment, for the M basic output units, the converter may further include an AND gate circuit having input terminals configured to receive output signals of the M output-voltage monitoring circuits and an output terminal connected to the first D flip-flop DFF1, the second D flip-flop DFF2, and the control logic circuit.

Specifically, for the M basic output units, the converter may further include an AND gate circuit. As shown in FIG. 2, the AND gate circuit, denoted as AND, has input terminals configured to receive the output signals of the four output-voltage monitoring circuits. For example, when the second output-voltage comparator CMP2 outputs the high-level comparison signal VCOM2 for the second basic output unit to the AND gate circuit, the AND gate circuit output the high-level signal VCOM_ALL, which may be input to the clock terminal CK of the first D flip-flop DFF1 or the second D flip-flop DFF2, enabling the first D flip-flop DFF1 or the second D flip-flop DFF2 to detect and respond to the rising edge of VCOM_ALL. Moreover, the signal VCOM_ALL may also be input to the control logic circuit to control the relevant switches.

In a possible embodiment, the converter may further include a first OR gate circuit OR1 and a second OR gate circuit OR2.

The first OR gate circuit OR1 has input terminals configured to receive output signals of the peak-inductor-current detection circuit and the first D flip-flop DFF1 respectively and an output terminal connected to the control logic circuit.

The second OR gate circuit OR2 has input terminals configured to receive output signals of the first D flip-flop DFF1 and the second D flip-flop DFF2 respectively and an output terminal connected to the control logic circuit.

In a possible embodiment, as shown in FIG. 2, the energy distribution circuit may include four basic output units connected in parallel.

In summary, the present disclosure provides a single-inductor multiple-output voltage converter. The converter includes an energy generation circuit, an energy distribution circuit, a peak-inductor-current detection circuit, a zero-inductor-current detection circuit, and a control logic circuit. The energy generation circuit includes an inductor, a charging switch, and a discharging switch, where the charging switch has a first terminal connected to an input voltage terminal and a second terminal connected to a first terminal of the inductor, and the discharging switch has a first terminal grounded and a second terminal connected to the first terminal of the inductor. The energy distribution circuit includes M basic output units connected in parallel, each including an output switch having a first terminal connected to a second terminal of the inductor and a second terminal serving as a corresponding output voltage terminal, M being an integer greater than 1. The peak-inductor-current detection circuit includes a charging comparator having a positive input terminal connected to the input voltage terminal via a first offset voltage and a negative input terminal connected to the first terminal of the inductor, where the charging comparator is configured to output a high-level signal indicative of peak-inductor-current detection when a voltage at the positive input terminal is higher than a voltage at the negative input terminal. The zero-inductor-current detection circuit includes a discharging comparator having a positive input terminal connected to the first terminal of the inductor via a second offset voltage and a negative input terminal grounded, where the discharging comparator is configured to output a high-level signal indicative of zero-inductor-current detection when a voltage at the positive input terminal is higher than a voltage at the negative input terminal. The control logic circuit is connected to the charging comparator and the discharging comparator, and is configured to: control the charging switch and the output switch corresponding to an m-th basic output unit among the M basic output units to turn on for causing the inductor to be charged; when an inductor current through the inductor reaches an upper threshold such that the charging comparator outputs the high-level signal indicative of peak-inductor-current detection, turn off the charging switch and turn on the discharging switch to cause the inductor to discharge energy to the output voltage terminal corresponding to the m-th basic output unit; and when the inductor current reaches a lower threshold such that the discharging comparator outputs the high-level signal indicative of zero-inductor-current detection, turn off the discharging switch and the output switch corresponding to the m-th basic output unit, m being an integer and satisfying M≥m≥1. The aforementioned converter can provide multiple different output voltages using a single inductor without multiple operational amplifiers, thereby avoiding excessive bandwidth demand associated with multiple operational amplifiers, thus reducing power consumption.

In the description of this specification, references to terms such as "in some possible embodiments", "in some embodiments", "example", "specific example" or "some examples" mean that a particular feature, structure, material, or characteristic described in connection with the embodiment or example is included in at least one embodiment or example of the present disclosure. Furthermore, the use of such terms does not necessarily refer to the same embodiment or example. Moreover, the specific features, structures, materials, or characteristics described may be combined in one or more embodiments or examples in any suitable manner. Additionally, provided there is no conflict, a person of ordinary skill in the art may combine and integrate the different embodiments or examples and their features as described in this specification.

Based on the foregoing, an embodiment of the present disclosure further provides a power chip, which includes any of the single-inductor multiple-output voltage converters described above.

An embodiment of the present disclosure further provides an electronic device, which includes a load and any of the single-inductor multiple-output voltage converters described above, where the converter is configured to supply power to the load.

It should be noted that the related descriptions of the single-inductor multiple-output voltage converter described above may be similarly applied to the power chip or the electronic device, and are not repeated here in this embodiment of the application.

Finally, it should be stated that the foregoing description merely illustrates specific embodiments of the present disclosure and is not intended to limit the scope of protection of the present disclosure. Any modifications or substitutions within the technical scope disclosed in the present disclosure shall be encompassed within the scope of protection of the present disclosure. Therefore, the scope of protection of the present disclosure shall be defined by the claims.

## Claims

1. A single-inductor multiple-output voltage converter, comprising an energy generation circuit, an energy distribution circuit, a peak-inductor-current detection circuit, a zero-inductor-current detection circuit, and a control logic circuit, **characterized in that**
the energy generation circuit comprises an inductor, a charging switch (SP), and a discharging switch (SN), the charging switch (SP) having a first terminal connected to an input voltage terminal (VBAT) and a second terminal connected to a first terminal of the inductor, and the discharging switch (SN) having a first terminal grounded and a second terminal connected to the first terminal of the inductor;
the energy distribution circuit comprises M basic output units connected in parallel, each comprising an output switch (S1, S2, S3, S4) having a first terminal connected to a second terminal of the inductor and a second terminal serving as a corresponding output voltage terminal, M being an integer greater than 1;
the peak-inductor-current detection circuit comprises a charging comparator (CMP5) having a positive input terminal connected to the input voltage terminal (VBAT) via a first offset voltage (VOS1) and a negative input terminal connected to the first terminal of the inductor, the charging comparator (CMP5) being configured to output a high-level signal (IPK) indicative of peak-inductor-current detection when a voltage at the positive input terminal is higher than a voltage at the negative input terminal;
the zero-inductor-current detection circuit comprises a discharging comparator (CMP6) having a positive input terminal connected to the first terminal of the inductor via a second offset voltage (VOS2) and a negative input terminal grounded, the discharging comparator (CMP6) being configured to output a high-level signal (ZCD) indicative of zero-inductor-current detection when a voltage at the positive input terminal is higher than a voltage at the negative input terminal; and
the control logic circuit is connected to the charging comparator (CMP5) and the discharging comparator (CMP6), and is configured to: control the charging switch (SP) and the output switch corresponding to an m-th basic output unit among the M basic output units to turn on for causing the inductor to be charged; when an inductor current through the inductor reaches an upper threshold such that the charging comparator (CMP5) outputs the high-level signal (IPK) indicative of peak-inductor-current detection, turn off the charging switch (SP) and turn on the discharging switch (SN) to cause the inductor to discharge energy to the output voltage terminal corresponding to the m-th basic output unit; and when the inductor current reaches a lower threshold such that the discharging comparator (CMP6) outputs the high-level signal (ZCD) indicative of zero-inductor-current detection, turn off the discharging switch (SN) and the output switch corresponding to the m-th basic output unit, m being an integer and satisfying M≥m≥1.

2. The single-inductor multiple-output voltage converter of claim 1, further comprising an energy recovery circuit, M output-voltage monitoring circuits respectively corresponding to the M basic output units, a rising-edge detection circuit, and a first reset pulse circuit, wherein
the energy recovery circuit comprises an energy recovery switch (SR) having a first terminal connected to the input voltage terminal (VBAT) and a second terminal connected to the second terminal of the inductor;
each of the M output-voltage monitoring circuits comprises an output-voltage comparator (CMP1, CMP2, CMP3, CMP4), wherein the output-voltage comparator of an m-th output-voltage monitoring circuit corresponding to the m-th basic output unit among the M output-voltage monitoring circuits is configured to be triggered to output a high-level comparison signal for the m-th basic output unit when an output voltage corresponding to the m-th basic output unit reaches a preset value;
the rising-edge detection circuit comprises a first D flip-flop (DFF1) configured to generate a charge termination signal for the m-th basic output unit when the m-th output-voltage monitoring circuit generates the high-level comparison signal;
the first reset pulse circuit is configured to reset the first D flip-flop (DFF1) based on a control signal of the control logic circuit that controls the discharging switch (SN); and
the control logic circuit is connected to the first D flip-flop (DFF1), and is further configured to: when the first D flip-flop (DFF1) generates the charge termination signal for the m-th basic output unit, turn off the charging switch (SP) and the output switch corresponding to the m-th basic output unit and turn on the discharging switch (SN) and the energy recovery switch (SR) to cause the inductor to discharge energy back to the input voltage terminal (VBAT); and when the inductor current reaches the lower threshold such that the discharging comparator (CMP6) outputs the high-level signal (ZCD) indicative of zero-inductor-current detection, turn off the discharging switch (SN) and the energy recovery switch (SR).

3. The single-inductor multiple-output voltage converter of claim 2, wherein the rising-edge detection circuit further comprises a second D flip-flop (DFF2), and the single-inductor multiple-output voltage converter further comprises a second reset pulse circuit, wherein
the second reset pulse circuit is configured to reset the second D flip-flop (DFF2) based on a control signal of the control logic circuit that controls the charging switch (SP);
the second D flip-flop (DFF2) is configured to generate a discharge termination signal for the m-th basic output unit when the m-th output-voltage monitoring circuit generates the high-level comparison signal; and
the control logic circuit is connected to the second D flip-flop (DFF2), and is further configured to: when the second D flip-flop (DFF2) generates the discharge termination signal for the m-th basic output unit, turn off the charging switch (SP) and the output switch corresponding to the m-th basic output unit and turn on the discharging switch (SN) and the energy recovery switch (SR) to cause the inductor to discharge energy back to the input voltage terminal (VBAT); and when the inductor current reaches the lower threshold such that the discharging comparator (CMP6) outputs the high-level signal (ZCD) indicative of zero-inductor-current detection, turn off the discharging switch (SN) and the energy recovery switch (SR).

4. The single-inductor multiple-output voltage converter of claim 3, further comprising M resistive feedback circuits respectively corresponding to the M basic output units, wherein
each of the M resistive feedback circuits comprises a first feedback resistor (RF1A, RF2A, RF3A, RF4A) and a second feedback resistor (RF1B, RF2B, RF3B, RF4B) connected in series, wherein for an m-th resistive feedback circuit corresponding to the m-th basic output unit among the M resistive feedback circuits, the first feedback resistor has a first terminal connected to the output voltage terminal corresponding to the m-th basic output unit, the second feedback resistor has a second terminal grounded, and a voltage at a node between the first feedback resistor and the second feedback resistor serves as a feedback voltage for the output voltage corresponding to the m-th basic output unit; and
for the m-th output-voltage monitoring circuit, the output-voltage comparator has a positive input terminal configured to receive the feedback voltage corresponding to the m-th basic output unit and a negative input terminal configured to receive a high reference voltage or a low reference voltage, the high reference voltage being greater than the low reference voltage, wherein when the output voltage corresponding to the m-th basic output unit has not reached the preset value, the negative input terminal of the output-voltage comparator receives the high reference voltage, and when the output voltage corresponding to the m-th basic output unit reaches the preset value, the output-voltage comparator outputs the high-level comparison signal for the m-th basic output unit, and the negative input terminal of the output-voltage comparator is switched to receive the low reference voltage.

5. The single-inductor multiple-output voltage converter of claim 3, further comprising M output load circuits respectively corresponding to the M basic output units, wherein
each of the M output load circuits comprises an output load resistor (RL1, RL2, RL3, RL4) and an output load capacitor (CL1, CL2, CL3, CL4) connected in parallel, wherein for an m-th output load circuit corresponding to the m-th basic output unit among the M output load circuits, the output load resistor has a first terminal connected to the second terminal of the output switch corresponding to the m-th basic output unit and a second terminal grounded, and the output load capacitor has a first terminal connected to the second terminal of the output switch corresponding to the m-th basic output unit and a second terminal grounded.

6. The single-inductor multiple-output voltage converter of claim 3, further comprising an AND gate circuit (AND) having input terminals configured to receive output signals of the M output-voltage monitoring circuits and an output terminal connected to the first D flip-flop (DFF1), the second D flip-flop (DFF2), and the control logic circuit.

7. The single-inductor multiple-output voltage converter of claim 3, further comprising a first OR gate circuit (OR1) and a second OR gate circuit (OR2), wherein
the first OR gate circuit (OR1) has input terminals configured to receive output signals of the peak-inductor-current detection circuit and the first D flip-flop (DFF1) and an output terminal connected to the control logic circuit; and
the second OR gate circuit (OR2) has input terminals configured to receive output signals of the first D flip-flop (DFF1) and the second D flip-flop (DFF2) and an output terminal connected to the control logic circuit.

8. The single-inductor multiple-output voltage converter of claim 1, wherein the energy distribution circuit comprises four basic output units connected in parallel.

9. A power supply chip, comprising a single-inductor multiple-output voltage converter according to any one of claims 1-8.

10. An electronic device, comprising a load, and a single-inductor multiple-output voltage converter according to any one of claims 1-8, wherein the single-inductor multiple-output voltage converter is configured to supply power to the load.
